# EUROPEAN PATENT APPLICATION

(11) **EP 4 826 460 A1**
(43) Date of publication of application: **21.10.2026**
(21) Application number: 25170864.0
(22) Date of filing: 16.04.2025
(51) Int. Cl.: G03G 15/22, H04N 1/23, H04N 1/387, B41J 2/205, B41M 3/00, B41M 3/06, B41M 3/16

(54) **METHOD FOR CREATING AN ELEVATED PRINT OF A TWO-DIMENSIONAL IMAGE AND A PRINTER THEREFOR**

(71) Applicant: Canon Production Printing Holding B.V., 5914 HH Venlo (NL)
(72) Inventor: WEIJKAMP, Clemens T., Venlo (NL)
(74) Representative: Canon Production Printing IP Department

(57) **Abstract**

A method for creating an elevated print of a 2D colour image, the method comprising the steps of creating a first heightmap from the 2D colour image with artificial intelligence algorithms and creating a black and white grayscale image from the 2D colour image. The method comprises the steps of blending the first heightmap and the black and white grayscale image into a second heightmap in a balance which depends on a maximum elevation height of the elevated print and a size of the elevated print, and printing the 2D colour image in combination with the second heightmap to achieve the elevated print.

## Description

### FIELD OF THE INVENTION

The invention relates to a method for creating an elevated print of a two-dimensional (2D) colour image, the method comprising the steps of creating a first heightmap from the two-dimensional colour image with artificial intelligence (Al) algorithms or by using a depth map captured with 3D cameras or photogrammetry and creating a black and white grayscale image from the two-dimensional colour image,

### BACKGROUND OF THE INVENTION

Elevated printing can be performed by ejecting multiple layers of ink on top of each other. A heightmap provided by the print controller controls for every pixel position in the XY plane a desired height at said pixel position. However, when no heightmap is available, another solution must be found. Another method to obtain a heightmap is to use the 2D colour image as a starting point and make a height design in for example Adobe Illustrator or Adobe Photoshop. However, manual creating the heightmap is time consuming and simply converting the 2D colour image to a black and white greyscale heightmap often gives strange and unrealistic results especially when the elevation height is larger than 0.5 mm. Al based technology may be used to create a heightmap based on 2D images and gives often good results. Al tooling like MIT (Massachusetts Institute of Technology) ZoeDepth, MiDaS or DepthAnything algorithms may be used. The Al tooling may be installed in a print controller of or on a workstation connected to the printer for elevated print production. Also a depth map may be captured with 3D cameras or photogrammetry. However, by doing so, fine details and texture are missing in the elevated print.

So, when only a 2D colour image is available without a heightmap, a first heightmap can be created from the 2D colour image by using Al technology as explained here-above. However, when an elevated print is created from the 2D colour image in combination with the first heightmap, the result is not convenient. The elevated print has too little details and texture.

It is an object of the invention to provide a method wherein the details and the texture of the elevated print are improved.

### SUMMARY OF THE INVENTION

According to the present invention this object is achieved by providing a method according to claim 1. A black and white grayscale image is created from the two-dimensional colour image, for example by using the black and white function of the application program Adobe Photoshop. The first heightmap created with (for example) Al tooling and the black and white grayscale image are blended into a second heightmap in a balance which depends on a maximum elevation height of the elevated print and a size of the elevated print. The two-dimensional colour image in combination with the second heightmap is printed to achieve the improved elevated print. The method according to the present invention adds fine details to heightmaps generated with Al tooling that are lacking texture and detail. The second heightmap gives the final print a realistic look and feel, and adds texture. The method reduces design time significantly and leads to more realistic heightmaps with texture and fine details.

According to an embodiment an optimal added texture height derived from the black and white grayscale image is in a range of 0 - 0.5 mm.

According to an embodiment the step of blending comprises a sub-step of normalising the values of the first heightmap and the black and white grayscale image to height values in a same value range, and for each pixel determining a balance of 75 - 85 % of a normalized height value of the heightmap with a corresponding 25 - 15 % of a normalized height value of the black and white grayscale image. The above-mentioned percentages correspond when they add up to 100%. The pixel values may be expressed in percentages from 0% to 100% or in absolute values, for example from 0 to 255. The pixel values of both maps are combined for each pixel in the set balance.

According to an embodiment the method comprises the step of inverting the black and white grayscale image before the blending step. Depending on the purpose the black and white grayscale image can be inverted. Often highlighted parts in the original colour image are higher parts, shadows represent the deeper parts. When converting to black and white the highlights become "white" and the shadows become "black". In elevated printing black is high and white is low. Therefore in many occasions inverting the black and white grayscale image may give more natural results.

The present invention also relates to a printer for elevated print production, the printer comprising a print controller for receiving a two-dimensional colour image and a first heightmap, and a print head for ejecting marking material to build up the elevated print, wherein the print controller is configured to perform the steps of the method according to the present invention. The first step of creating the first heightmap may be carried out on a workstation connected to the printer via a network. The printer may comprise a user interface wherein a user is able to set the balance for the blending step of the method according to the present invention. The print controller controls and maintains the balance set via the user interface. When the user sets the balance by means of the user interface, the user takes the specified maximum elevation height of the elevated print and a size of the elevated print into account.

The present invention also relates to a non-transitory recording medium comprising computer executable program code configured to instruct a printer according to the present invention to perform the method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: shows a printing system according to the present invention;
- Fig. 2: shows an example of the images involved in the method according ot the present invention;
- Fig. 3: is a flowchart of an embodiment of the method according to the present invention; and
- Fig. 4: is a schematic diagram of a non-transitory recording medium according to the present invention.

### DETAILED DESCRIPTION OF EMBODIMENTS

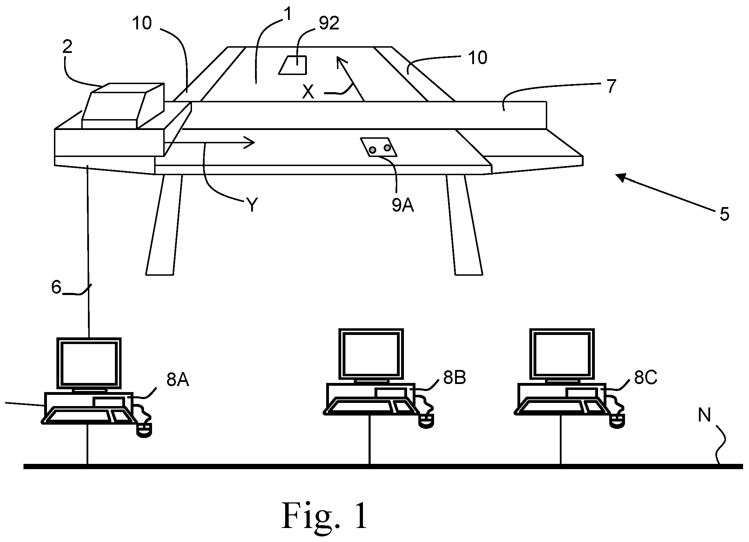

Fig. 1 shows a printing system 5 according to the present invention. The printing system 5 comprises a number of workstations 8B, 8C, which may be personal computers or other devices for preparing image data for elevated prints to be printed. The work station 8B, 8C may comprise installed basic image processing tooling as well as Al tooling for creating depth in 2D images, for example for receiving or creating the 2D colour image and for creating the first height map according to the present invention. These workstations have access to a network N for transferring print jobs comprising the image data to a print controller 8A that is configured to receive the print jobs for prints and derive pass images. The print controller 8A may be part of the printing system 5 connected to a print controller of the print system 5 via a connection 6. The print controller 8A is configured to receive the 2D colour image and the first height map according to the present invention. The printing system 5 further comprises a print head 2 attached to an armature 7 for applying colorants, for example cyan ink (C), magenta ink (M), yellow ink (Y), black ink (K), white ink (W), transparent ink also known as varnish, and structure ink to a flat media piece 9A placed on a flatbed area 1 in order to obtain an elevated print. The armature 7 may be a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while another piece 92 is not provided with any recording material yet. The print head 2 reciprocally scans the flatbed area 1 in the second direction Y along a gantry 7 perpendicular to a first direction X of the gantry 7 over the flatbed area 1 along guiding parts 10. During printing of an image on the piece 9A of media the piece 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The piece of media 9A may have a thickness of 10 mm, while the piece of media 92 may have a thickness of 20 mm.

The flat bed surface 1 is provided with through-holes to allow air to pass through the flat bed surface 1. A pressure chamber (not shown) is provided below flat bed surface 1 as part of a suction chamber assembly. By applying a negative pressure in the pressure chamber, print media can be securely and flatly held against the flat bed surface 1.

In order to allow the printing of an elevated print by printing layers of ink on top of each other to a certain substantial height of a plurality of mm., the print head 2 is adjustable in height in a direction perpendicular to the flat bed surface 1.

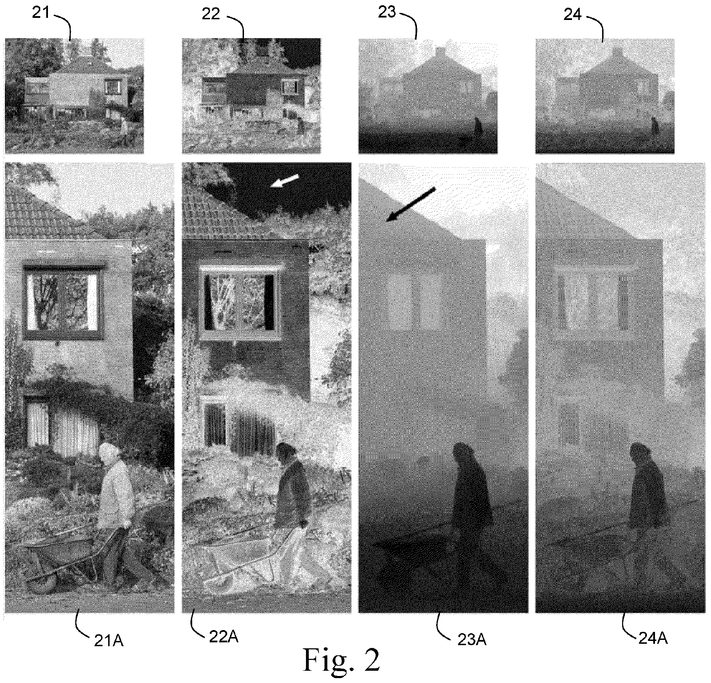

Fig. 2 shows an example of the images involved in the method according ot the present invention.

A 2D colour image 21 is selected to be used for producing an elevated print. A first sub-image 21A is shown for elucidation purposes which is part of the 2D colour image 21.

A black and white grayscale heightmap 22 based on the 2D colour image 21 is created by means of a basic image processing application like Adobe Photoshop. A second sub-image 22A is shown which is part of the black and white grayscale heightmap 22. The heightmap 22 gives unrealistic heights. For example, as indicated by the white arrow in the second sub-image 22A the sky has a highest value, i.e. it has a black colour. In a range of height values 0 - 255 the sky gets the value 255, in a range of percentage values 0 - 100 the sky gets a percentage of 100%).

A first heightmap 23 based on Al depth estimation is created by means of Al tooling, for example the ZoeDepth algorithm. The ZoeDepth algorithm makes an estimation of the distance from the camera to an object in the scene, resulting in the first heightmap. A third sub-image 23A is shown which is part of the first heightmap 23. The heightmap 23 misses fine details. For example, as indicated by the black arrow in the third sub-image 23A the roof has only one single height value and therefore does not reveal any details which are nevertheless present in the same roof shown in the first sub-image 21A and in the second sub-image 22A. It is noticed that the sky in the third sub-image 23A is now light, close to white.

A second heightmap 24 is created according to the present invention. A fourth sub-image 24A is shown which is a part of the second heightmap 24. The second heightmap is a blend of the black and white grayscale heightmap 22 and the first heightmap 23. In this example, the second heightmap 24 is a 80/20 combination of the first heightmap 23 and the black and white grayscale heightmap 22. The second heightmap 24 is a realistic heightmap with many fine textures and details. The textures and details can be for example observed in the roof and the sky of the fourth sub-image 24A.

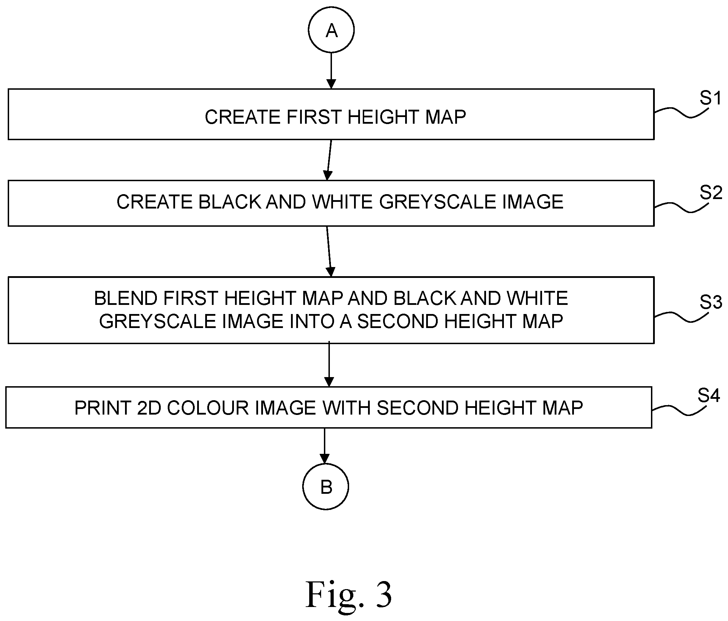

Fig. 3 is a flowchart of an embodiment of the method according to the present invention. Starting point of the method is point A. Point A leads to a first step S1.

In the first step S1 a first heightmap is created from the two-dimensional colour image with artificial intelligence algorithms. The first step S1 may be carried out on a workstation of a designer connected to the printer via a network.

In a second step S2 a black and white grayscale image is created from the two-dimensional colour image. The second step S2 is carried out by the print controller.

In a third step S3 the first heightmap and the black and white grayscale image are blended into a second heightmap in a balance which depends on a maximum elevation height of the elevated print and a size of the elevated print. The example given in Fig. 2 which has a 80/20 blend combination gives optimal results for an elevated print of approximately 30 x 30 cm and an elevation height of 4 mm. For example, when a pixel value of the first height map is 70% and a pixel value of the black and white grayscale image is 60%, the pixel value of the second heightmap will become 70% * 0.80 + 60% * 0.20 = 56% + 12% = 68% in the case that the blend balance equals 80/20. The third step S3 is carried out by the print controller.

In a fourth step S4 the two-dimensional colour image in combination with the second heightmap is printed to achieve the elevated print.

The method ends in an end point B.

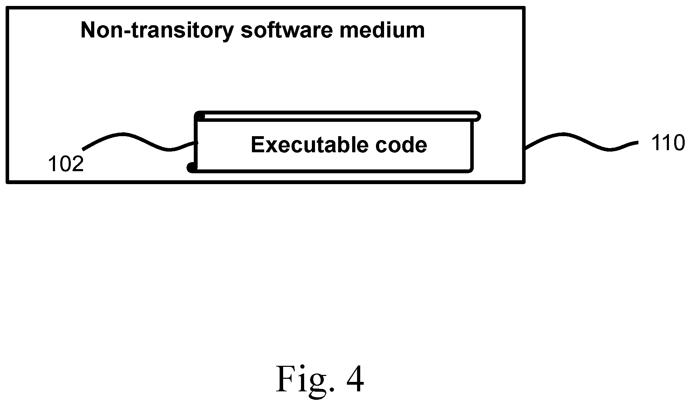

Fig. 4 schematically shows a non-transitory software medium 110 according to the invention. The software medium 110 comprises executable code 102 configured to, when executed, perform the method according to the invention, e.g. as described with respect to either the printer shown in Fig. 1 or the method shown in Figs. 2 and 3 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. A method for creating an elevated print of a two-dimensional colour image, the method comprising the steps of
a) creating a first heightmap from the two-dimensional colour image with artificial intelligence algorithms or by using a depth map captured with 3D cameras or photogrammetry,
b) creating a black and white grayscale image from the two-dimensional colour image, wherein the method comprises the steps of
c) blending the first heightmap and the black and white grayscale image into a second heightmap in a balance which depends on a maximum elevation height of the elevated print and a size of the elevated print, and
d) printing the two-dimensional colour image in combination with the second heightmap to achieve the elevated print.

2. A method according to claim 1, wherein an optimal added texture height derived from the black and white grayscale image is in a range of 0 - 0.5 mm.

3. A method according to claim 1 or 2, wherein the step of blending comprises a sub-step of normalising the values of the first heightmap and the black and white grayscale image to height values in a same value range, and for each pixel determining a balance of 75 - 85 % of a normalized height value of the heightmap with a corresponding 25 - 15 % of a normalized height value of the black and white grayscale image.

4. A method according to any of the preceding claims, wherein the method comprises the step of inverting the black and white grayscale image before the blending step c).

5. Printer for elevated print production, the printer comprising a print controller for receiving a two-dimensional colour image and a first heightmap, and a print head for ejecting marking material to build up the elevated print, wherein the print controller is configured to perform the steps b) - d) of the method according to any of the preceding claims.

6. Printer according to claim 5, wherein the printer comprises a user interface for setting the balance for the blending step of the method according to any of the claims 1 - 4.

7. Non-transitory recording medium comprising computer executable program code configured to instruct a printer according to claim 5 to perform the method according to any of the claims 1 - 4.
